# EUROPEAN PATENT SPECIFICATION

(11) **EP 1 321 028 B1**
(45) Date of publication and mention of the grant of the patent: **02.01.2008**
(21) Application number: 02258694.5
(22) Date of filing: 17.12.2002
(51) Int. Cl.: A01F 15/07

(54) **Baler and enveloping apparatus**
Presse mit Ballenwickelvorrichtung
Presse avec un appareil pour envelopper des balles

(30) Priority: 20.12.2001 GB 0130465
(43) Date of publication of application: 25.06.2003
(73) Proprietor: Kverneland ASA, 4344 Kvernaland (NO)
(72) Inventor: Kaeppeler, Josef, 78333 Stockach (DE)
(74) Representative: Raynor, Simon Mark

(56) References cited:
- EP-A- 0 815 719
- EP-A- 1 285 571
- WO-A-03/039240
- US-A- 4 787 193
- US-A- 5 974 764

## Description

This invention relates to a baler and enveloping apparatus for forming and enveloping a cylindrical bale.

Baler apparatus for forming cylindrical bales are of the fixed chamber and the variable chamber type, and will be well known to those of ordinary skill in the art and need not be described in detail herein.

A baler according to the preambles of claims 1 and 6 is known from US-A-4 787 193.

After formation of a cylindrical bale, it is usual to apply a strip of netting which is wound around the cylindrical surface of the bale, and this takes place while the formed bale remains in the bale-forming chamber. It is usually necessary to rotate the bale through up to three revolutions, in order to withdraw the netting from a supply reel and to apply three successive layers of netting around the cylindrical surface of the bale, and whereby the netting effectively forms a partial envelope around the bale.

The netting is then able to maintain the shape of the bale, during subsequent handling and eventual storage of the bale. The subsequent handling may comprise rearward discharge of the (net-enveloped) bale onto the ground, loading of the bale on a trailer and transport to a storage location.

Alternatively, especially in the case of baled grass intended to form silage, the bale is picked-up from the ground and loaded onto a bale wrapping apparatus which applies stretch film wrapping which covers the cylindrical surface of the bale, and also the two circular end faces of the bale.

The partial envelope of netting around the bale presently requires successive layers of netting in order to retain the shape of the bale, and to assist the layers of netting (two or more) to remain (a) secured to the cylindrical surface of the bale and (b) to remain secured to each other so as to prevent the netting from unwinding itself from the bale. In the case of baled straw, the individual stalks can project through the apertures in the netting and thereby help to maintain the layers of netting in position. However, in the case of baled grass (partly dried only for subsequent formation of silage), the netting has less secure engagement with the bale, and therefore has to rely more upon adhesion between successive layers of netting to maintain the shape of the bale, and which therefore in most cases necessitates use of three layers at least of netting.

It is also known to provide integrated baler and wrapper apparatus, which are capable, in a single piece of equipment, of carrying out three separate operations, namely (1) formation of a cylindrical bale, (2) application of layers of netting around a cylindrical surface of the bale to form a partial envelope and (3) application of stretch film wrapping around the partially netted bale. The third operation usually involves simultaneous rotation of the bale about its axis while an orbiting satellite film dispenser reel rotates in a horizontal plane around the rotating bale in order to apply several layers of stretch film wrapping around the bale. The final stage of wrapping applies the stretch film around both the cylindrical surface of the bale (already enveloped with layers of netting), and also covers the two circular end faces of the bale. In such an integrated apparatus, the layers of netting are required around the cylindrical surface of the bale in order to retain the shape of the bale while film-wrapping takes place.

The present invention is concerned with a more simple type of baler apparatus, and which is capable, in situ, of (a) forming the cylindrical bale, (b) applying a partial envelope of netting around the cylindrical surface of the bale and (c) applying stretch film wrapping to the bale.

According to a first aspect of the invention there is provided a baler apparatus for forming and enveloping a cylindrical bale and which comprises:
a bale-forming chamber;
means for supplying material to be baled to the chamber;
rollers, belts or like engaging means arranged around the periphery of the chamber to assist in the formation of a bale;
means for applying a longitudinal strip of netting to envelope the cylindrical outer surface of the bale, such means being operative to feed the strip into the chamber and, upon rotation of the bale about its axis by at least part of said engaging means, to apply a layer of netting around the cylindrical surface of the bale; and,
means for applying stretch film wrapping to envelope the cylindrical surface of the bale, while the formed bale remains in the bale-forming chamber, such film wrapping being fed into the chamber and to envelop the cylindrical surface, and thereby form effectively a combined envelope of film and netting on to the cylindrical surface of the bale.

In a preferred arrangement, the film is applied into direct contact with the cylindrical surface of the bale to adhere thereto. Alternatively, a netting layer is first applied direct to the cylindrical surface of the bale, and which is followed by a layer of film.

The film wrapping may be formed by a single longitudinal strip, or by a composite strip formed from two or more narrow strips arranged side by side, preferably overlapping.

Apparatus according to the invention therefore provided, by simple means, an arrangement whereby the successive steps of (1) bale-forming, (2) enveloping the cylindrical surface of the bale with a netting layer and (3) applying film wrapping so as to form a laminated layer with the netting while the formed bale remains in the bale-forming chamber.

Also, since the netting layer operates in conjunction with the film (as a laminated layer) to maintain the shape of the bale, it is no longer necessary to apply three or more layers of netting as in the case with existing balers (in which the net-wrapped bale has to undergo subsequent robust handling). Therefore, less layers of netting, and also of film may need to be used (and also thinner film can be utilised), in order to form a durable envelope around the cylindrical surface of the bale. This has the advantage of economy in usage of materials, and also a saving in time, which means that the rate of production of enveloped bales can be increased, compared with what is available using existing (non-integrated) equipment.

Finally, in that the film strip underlies the netting strip on application to the cylindrical surface of the bale, the strip of netting protects the film strip from coming into engagement with the rollers or the like (forming the bale-engaging means) during at least the first stage of the application of the film strip to the bale and which is a big advantage, since otherwise the film may be liable to become entangled with the rollers.

The netting and the film are preferably supplied from respective dispenser reels from which they are withdrawn, and separate entry guides may be provided which are preferably circumferentially close to each other, to feed the netting and the film into the bale-forming chamber. Alternatively, a single entry guide may be provided, which receives the netting and the film. During initial rotation of the bale, the leading end of the netting strip is applied first to the cylindrical surface, followed by actual application of the film directly onto the cylindrical surface so as to underlie the netting layer and thereby be protected from coming into engagement with the first (and subsequent) rollers of the bale-forming means. Thereafter, further rotation of the bale pulls the netting layer and the film layer so as to envelope the cylindrical surface, and which together form a laminated layer.

If required, more than one laminated layer of film and netting may be applied to the cylindrical surface of the bale, and therefore it is only necessary to rotate the bale through a required number of further revolutions, or part revolutions, to obtain a required thickness of laminated envelope around the cylindrical surface. In one preferred arrangement, a netting layer of about 1.2 revolutions is applied, and then the netting is cut. This is followed by at least one, and preferably two layers of film only.

The netting and / or the film may be fed into the bale-forming chamber by other means than guides, such as by gravity feed from above and into the chamber.

According to a second aspect of the invention there is provided a baler apparatus for forming and enveloping a cylindrical bale having a cylindrical outer surface and a pair of opposed circular end faces, and which comprises:
a bale-forming chamber;
means for supplying material to be baled to the chamber;
rollers, belts or like engaging means arranged around the periphery of the chamber to assist in the formation of a bale;
means for applying a longitudinal strip of netting around the cylindrical outer surface of the bale so as to form at least one layer of netting thereon; and,
means for applying stretch film wrapping to the bale, such film wrapping being of greater width than the axial extent of the bale and having a main portion which is guided to overlie the cylindrical surface of the bale, and a pair of opposed marginal portions which are guided so as to fold radially inwardly with respect to the axis of the bale and to engage each with at least an outer circumferential region of a corresponding circular end face of the bale.

Apparatus according to the second aspect of the invention therefore is able to carry out three separate operations in situ within the bale-forming chamber, namely (I) formation of the bale, (2) application of at least one layer of netting around the cylindrical outer surface of the bale and (3) application of a main portion of stretch film which overlies the cylindrical outer surface of the bale, and marginal portions which also cover each circular edge of the bale and extend radially inwardly of the bale so as to engage with an adjacent outer circumferential region of each end face of the bale.

The film wrapping may be formed by a single longitudinal strip of film. As an alternative to application of a single wide strip of stretch film to the bale, a composite strip of at least two narrower strips of film may be applied, side by side to the bale (preferably overlapping), provided that their combined widths are greater than the axial extent of the bale.

Therefore, it is possible to achieve economies of usage of netting and film wrapping materials, similarly to the first aspect of the invention, but also provides initial wrapping of the vulnerable two opposed circular corner edges of the bale. Therefore, upon subsequent discharge of the partly enveloped bale, it can subsequently be picked-up by bale wrapper apparatus, and complete wrapping of the bale can then take place, using any one of existing types of bale wrapper apparatus. As is well known, a bale wrapper apparatus usually rotates the bale about its longitudinal axis, simultaneous with wrapping of stretch film in a spiral manner around the bale, whereby the cylindrical outer surface, and the two circular end faces are progressively wrapped, usually with several overlapping layers. Given that the vulnerable corner edge regions have already been covered with stretch film, the number of overlapping layers can be reduced, compared with use of existing balers.

Preferably, in the apparatus according to the second aspect of the invention, the longitudinal strip of netting also has a width which is greater than the axial extent of the bale, so that opposed marginal edge regions of the strip of netting also can fold radially inwardly, preferably by reason of built-in elasticity, so as to engage over the corner edge region of the bale and engage the outer circumferential region of each corresponding circular end face of the bale.

The invention also is concerned with the method of forming a cylindrical bale, and applying netting and stretch film wrapping to the bale, using apparatus according to the first or second aspects of the invention, and optionally utilising any one or more of the preferred features of the apparatus as defined above.

A preferred embodiment of baler and enveloping apparatus according to the invention will now be described in detail, by way of example only, with reference to the accompanying diagrammatic drawings, in which:
Figure 1 is a diagrammatic side view of a combined baler, and net and film wrapping or enveloping apparatus according to the invention;
Figure 2 is a diagrammatic end view of the baler (looking in a direction perpendicular to the axis of the bale) and illustrating how stretch film wrapping is guided into the bale forming chamber in order partly to wrap the bale; and
Figure 3 is a diagrammatic end view of a bale which has a number of laminated layers (of film and netting) arranged around its cylindrical surface, employing apparatus according to the invention;
Figures 4 illustrates schematically how uncovered areas of the end faces of the bale (i.e. areas not covered by the film) may be subsequently covered over;
Figure 5 illustrates how film layers may be applied obliquely to the cylindrical surface and end faces of the bale; and
Figures 6 to 8 show examples of how laminated formations of film and netting may be applied to envelope a bale.

Referring now to the drawings, the baler and enveloping apparatus according to the invention is designated generally by reference 10, and may be of the fixed chamber or variable chamber type. The constructional details of such balers will be well known to those of ordinary skill in the art, and need not be described in detail herein.

A cylindrical bale 11 is formed in a bale-forming chamber 12, and which is provided with rollers, belts or like engaging means (not shown) arranged around the periphery of the chamber 12, to assist in the formation of the bale 11.

The bale 11 has a cylindrical outer surface 13 and a pair of opposed circular end faces 14, which extend radially inwardly of the cylindrical surface 13 with respect to longitudinal axis 15 of the bale 11.

Pick-up means (not shown) is provided to pick-up crop material lying on the ground, and to feed it to the chamber 12.

After formation of the bale 11, it is necessary to apply a longitudinal strip of netting to envelope the cylindrical outer surface of the bale, so that the bale can maintain its cylindrical shape, during subsequent handling of the bale. Subsequent handling of the bale may comprise rearward discharge onto the ground, or a trailer, and ultimately transport to a storage location. Other handling operations can include subsequent picking-up of the discharged bale and loading into a bale wrapper apparatus, which then applies (additional) stretch film wrapping in order to apply several wrapping layers which completely cover the cylindrical outer surface of the bale, and the two circular end faces.

Means is provided therefore to apply a longitudinal strip of netting to envelope the cylindrical outer surface of the bale, and such means is operative to feed the strip into the chamber 12, and upon rotation of the bale about its axis 15 by at least some of the engaging means, to apply a layer of netting to the cylindrical surface of the bale. The netting is supplied from a reel, and is withdrawn as the bale 11 rotates, the netting envelops the cylindrical surface of the bale. The netting may have a width which is greater than the axial extent of the bale, so that the opposed marginal edges of the strip of netting can be folded radially inwardly with respect to the axis 15 of the bale 11 and so that each marginal edge of the netting can overlie part of the surface of the adjacent circular end face 14 of the bale. This may be achieved by incorporating resilient tensile means e.g. elasticated strips into each marginal edge of the netting, so that the edges automatically fold inwardly and move into contact with the circumferential outer region of each end face of the bale, adjacent to the corner edge which is the transition between the cylindrical surface and the circular end face.

Means is also provided to apply a longitudinal strip of stretch film wrapping to the cylindrical surface of the bale, such film also being fed into the chamber 12, but in such a way that the leading end of the film underlies the netting layer and thereby form effectively a laminated layer of film and netting secured to the cylindrical surface 13 of the bale.

Both the application of the netting layer, and the stretch film wrapping, takes place while the formed bale remains in the chamber 12. Further, since the netting layer is only required to maintain the shape of the bale while it is resident in the chamber, it is no longer necessary to apply three or more layers of netting as in the case of existing balers. The net can therefore enter the chamber 12 and undergo 1.25 to 2 revolutions, before the strip of netting is cut from its supply reel. The stretch film is inserted after the netting has come into contact with the bale, and before the netting has been cut. The number of revolutions of the bale may then be two or three, so as to apply a suitable number of laminated layers (film wrapping and netting) which has the dual advantage of maintaining the shape of the bale, and also giving weather proof covering of at least the cylindrical surface of the bale.

There is therefore the advantage of entering the leading end of the netting first into the chamber, and then feeding the leading end of the sticky wrapping film directly onto the cylindrical surface of the bale, and with the first layer of the sticky wrapping film adhering to the cylindrical surface of the bale, and subsequent layers adhering to underlying layers of netting; therefore less revolutions of netting are required e.g. 1.25 revolutions. Also, subsequent removal of the film and the netting (forming a laminate) from a bale, is much easier because they are a unitary structure, whereas with existing arrangements the netting can be difficult to remove. Alternatively, a netting layer may first be applied to the cylindrical surface of the bale, and the sticky layer of film may then be applied to the netting layer to form a laminated envelope on the bale.

The netting and the stretch film are therefore supplied from respective dispenser reels from which they are withdrawn, and an entry guide is provided in the wall of the chamber which guides the leading end of the strip of netting first onto the cylindrical surface of the bale and which is then moved forwardly by the bale to engage a first roller (of the bale-engaging means). The guide also feeds the strip of film onto the bale surface so as to underlie the netting. The film is then moved forwardly with the bale and the netting, with the film protected from contact with the first roller (and subsequent rollers) of the bale-engaging means.

After one complete revolution of the bale, a laminated layer of film (on the bale) and netting (on the film) is formed, and which completely covers and envelopes the cylindrical surface of the bale. Subsequent revolutions, or part revolutions, of the bale, may then apply a second layer of film on an underlying first layer of netting, and also a second layer of netting on the second layer of film if required. The final layer will be a film layer, so as to complete the wrapping of the cylindrical surface of the bale with a weather-protected laminated formation of film and netting.

Also, it is preferred that the longitudinal strip of stretch film wrapping which is applied to the bale has a greater width than the axial extent of the bale, and therefore has a main portion which is guided to overlie the layer of netting on the cylindrical surface of the bale, and a pair of opposed marginal portions which are guided so as to fold radially inwardly, with respect to the axis of the bale, to engage each with at least an outer circumferential region of a corresponding circular end face of the bale.

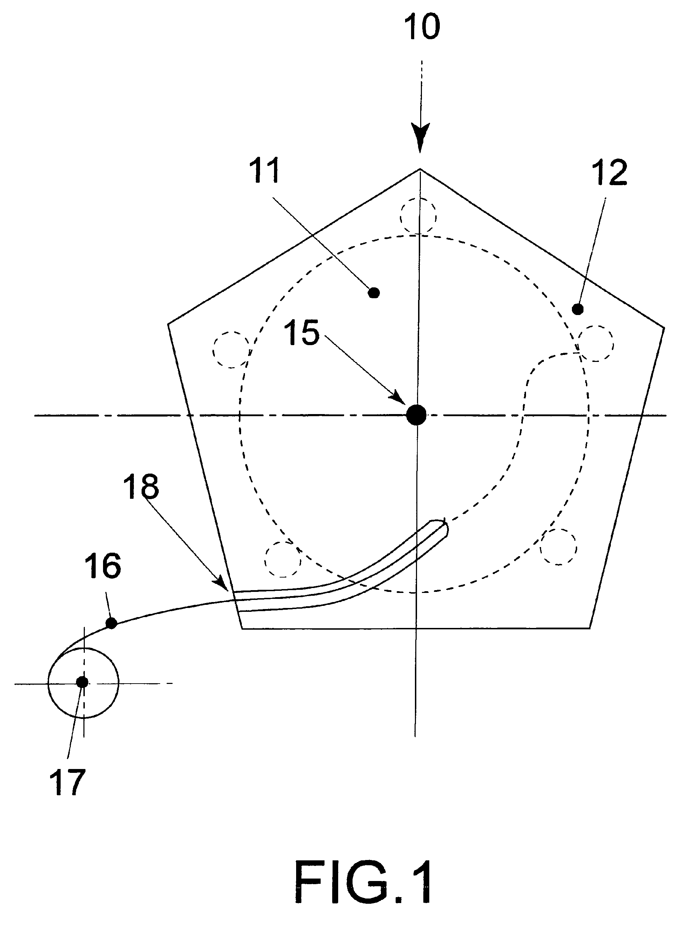

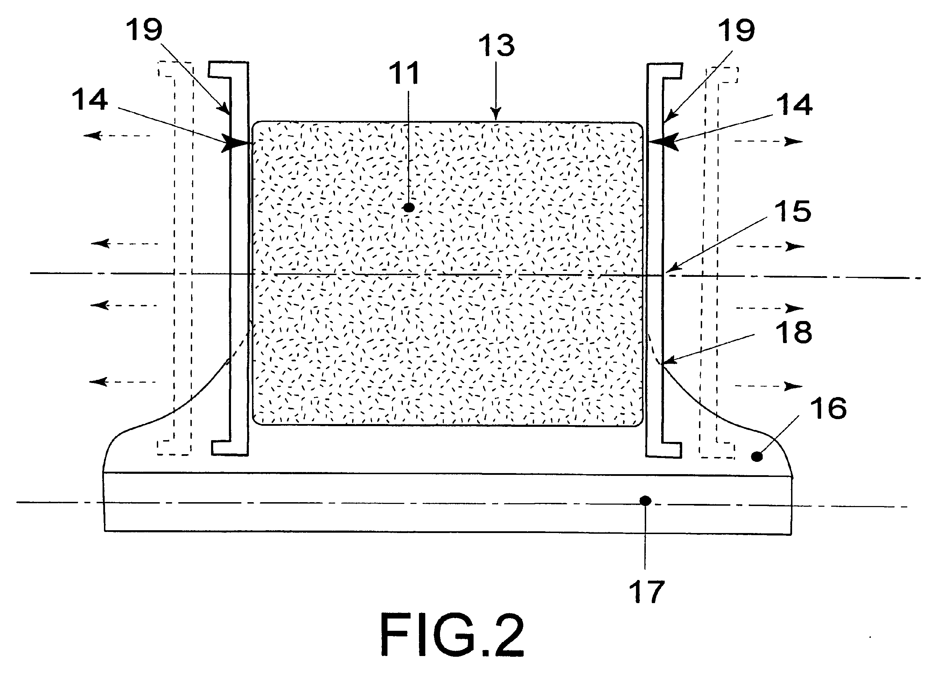

Figures 1 and 2 show the supply of a strip of stretch film wrapping 16 from a supply reel 17, and into the chamber 12, via a suitable guide arrangement. As can be seen particularly from Figure 2, the width of the strip 16 is greater than the axial extent of bale 13, and guides 18 formed in the side walls 19 of the bale chamber 12 guide the strip so that a main portion overlies the cylindrical surface of the bale, whereas marginal edge portions of the strip 16 are folded radially inwardly so as to overlie an outer circumferential portion of each side face 14 of bale 11.

With such an arrangement, the vulnerable corner edge regions of the bale are already covered with stretch film wrapping, after discharge from the baler, and subsequent picking-up and loading onto a bale wrapper apparatus. Therefore, when the wrapper apparatus is employed to complete coverage of the bale, it is only necessary to apply two layers of film to the side faces of the bale, using a normal bale wrapper. This means that less wrapping time is involved, and also economies in usage of film.

To facilitate the engagement of the side edges of the strip 16 with the peripheral margins of the end faces 14 of the bale 11, and / or prevent adhesion with the side walls 19 of the bale-forming chamber 12, grease, lubricant or a gas may be introduced between the strip on the bale and the side wall 19. Alternatively, or additionally, the walls 19 (or a part of the wall in contact with the film) may be driven to rotate at the same speed as the bale. Also, the wall 19 (after formation of the bale and when applying the film over the edge) could be displaced away from the bale in a direction parallel to the rotational axis of the bale.

Figures 1 and 2 do not illustrate the means whereby the longitudinal strip of netting is fed to the chamber 12, so as to be applied around the cylindrical surface 13 of the bale 11, but this can take any convenient arrangement, such as are already employed in variable and fixed chamber balers.

As an alternative to use of a wide film strip 16, two or more narrower strips (not shown) may be applied, side by side (or slightly overlapping preferably), to the cylindrical surface of the bale, provided that the combined widths are greater than the axial extent of the bale.

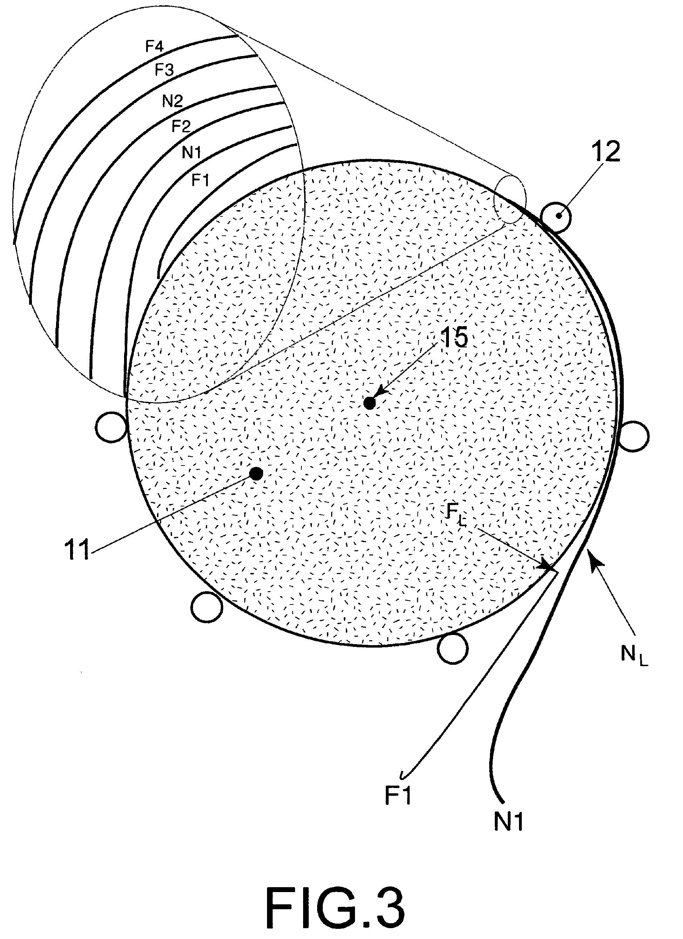

Figure 3 shows schematically the application of successive layers of film and netting to the cylindrical surface of the bale. Consecutive layers of film and netting are referenced F₁, N₁, F₂, N₂ etc., to show how the laminated layers are formed.

It is preferred that the feeding of the leading ends of netting N_{L} and film F_{L} onto the cylindrical surface of the bale is in such a way that the leading end of the netting N₁ first is applied to the cylindrical surface, and then the netting is withdrawn from the dispenser reel as the bale rotates, but this is followed by application of the leading end of film F₁ also onto the cylindrical surface of the bale, and such that the film layer F₁ underlies the netting layer (apart from the leading end N₁), and whereby the netting layer effectively pulls the film layer around the cylindrical surface of the bale, with the film layer underlying the netting layer.

However, this is not essential to the invention, and in an alternative arrangement, the netting layer is first formed directly around the cylindrical surface of the bale, through one revolution of the bale, and then followed by one or more layer of film.

In the schematic illustration of Figure 3, it is preferred that netting layers N₁ and N₂ are formed by more than one revolution of the bale e.g. 1.2 revolutions, and the final layer will always be a film layer, which as a minimum is film layer F₃, or optionally F₄ in addition. The leading end of net (N_{L}) is preferably downstream of film (F_{L}) by about 1-30cm.

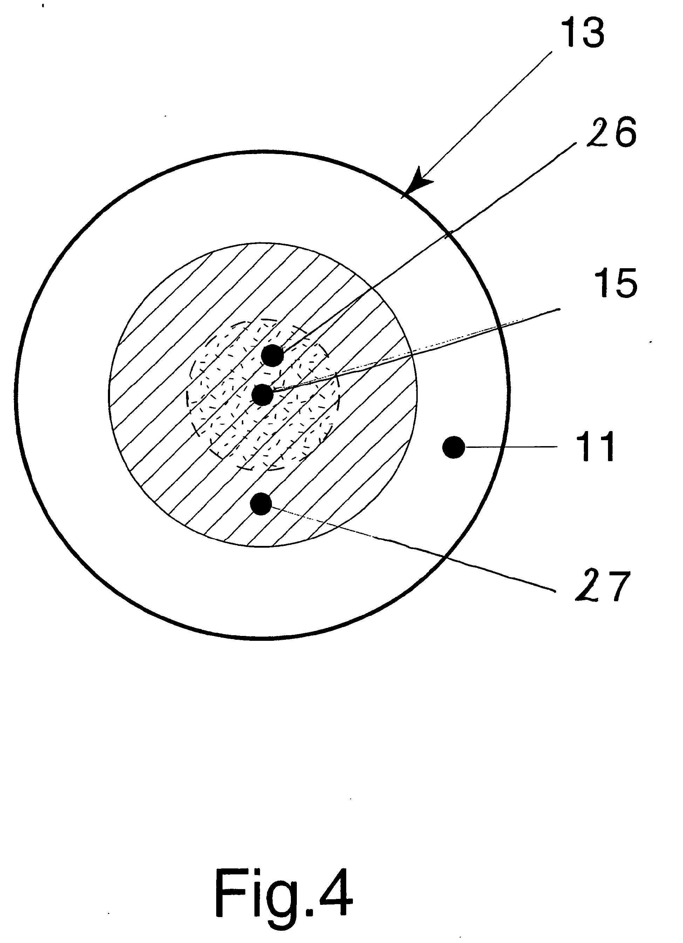

Figure 4 shows how the application of the film layers to the bale may cover most, but not all of the circular end faces 14, leaving a small circular area 26 surrounding the axis 15. Figure 4 shows how this uncovered area 16 may be covered up subsequently by application of a larger circular sticky patch 27, which may take place after discharge of the bale from the apparatus.

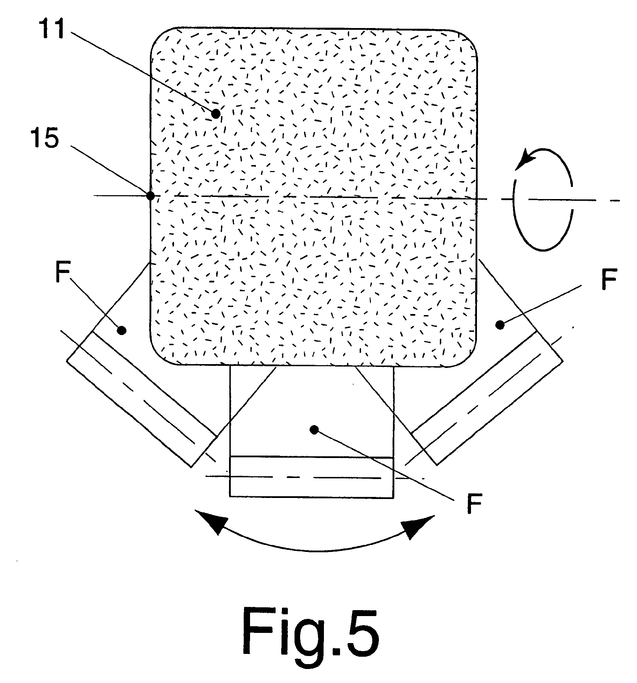

Figure 5 shows how more than one film dispenser reel may be provided, of which at least one extends obliquely relative to the bale, so as to apply film which covers part of the cylindrical surface of the bale, and also overlies at least a major part of the adjacent end face of the bale.

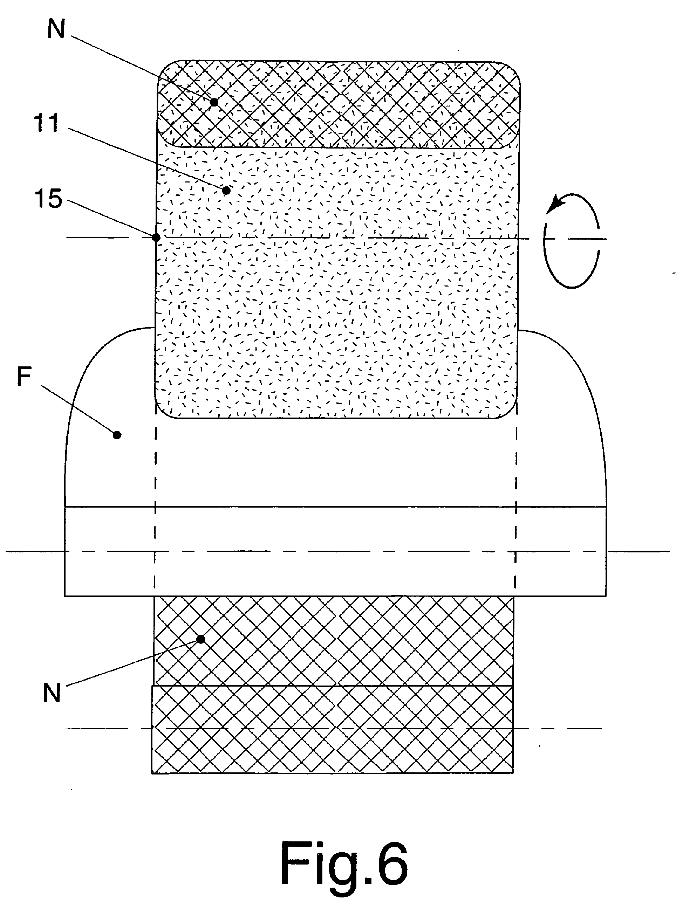

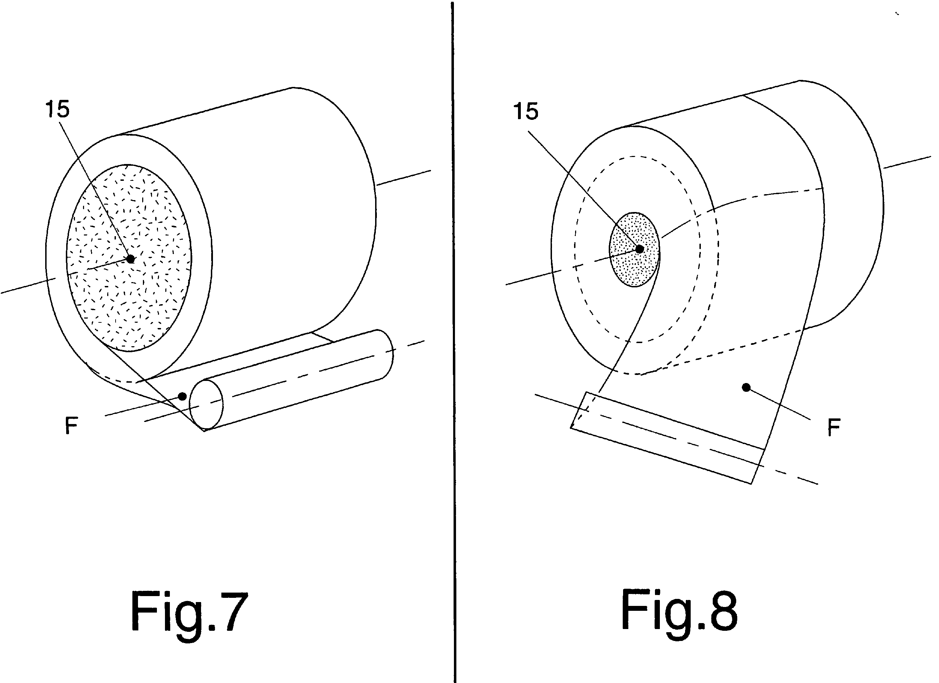

Figures 6 to 8 illustrate practical examples of application of netting N and film F laminated formations around the cylindrical 13 and end faces 14 of a bale 11.

The film and / or netting layers may be fed into the bale-forming chamber by means other than guides. For example, gravity feeding of the film and / or netting into the chamber may be utilised.

## Claims

1. A baler apparatus (10) for forming and enveloping a cylindrical bale (11) and which comprises:
a bale-forming chamber (12);
means for supplying material to be baled to the chamber (12);
rollers, belts or like engaging means arranged around the periphery of the chamber (12) to assist in the formation of a bale;
means for applying a longitudinal strip of netting to envelope the cylindrical outer surface (13) of the bale (11), such means being operative to feed the strip into the chamber (12) and, upon rotation of the bale (11) about its axis (15) by at least part of said engaging means, to apply a layer of netting around the cylindrical surface (13) of the bale (11); and, **characterized in that** the apparatus further comprises
means for applying stretch film wrapping (16) to at least the cylindrical surface (13) of the bale (11), while the formed bale (11) remains in the bale-forming chamber (12), such film being fed (18) into the chamber (12) and thereby form effectively a combined envelope of film and netting on the cylindrical surface (13) of the bale (11).

2. Apparatus according to claim 1, in which the film is guided onto the cylindrical surface so as to underlie a first netting layer applied to the bale.

3. Apparatus according to claim 2, in which the netting N and the film wrapping F are supplied from respective dispenser reels from which they are withdrawn, and an entry guide arrangement is operative first to feed the leading end of the netting N onto the cylindrical surface (13) of the bale (11) and then subsequently the leading end of the film wrapping F onto the surface so as to underlie the netting and form a laminated layer of film and netting on the cylindrical surface of the bale.

4. Apparatus according to claim 3, in which the netting is applied via at least one revolution of the bale, preferably about 1.2 revolutions, followed by application of at least one layer of film on the netting layer.

5. Apparatus according to claim 1, in which a first layer of netting is applied to the cylindrical surface of the bale, by up to one revolution of the bale, followed by application of at least one layer of film wrapping on the netting layer.

6. A baler apparatus (10) for forming and enveloping a cylindrical bale (11) having a cylindrical outer surface (13) and a pair of opposed circular end faces (14), and which comprises:
a bale-forming chamber (12);
means for supplying material to be baled to the chamber (12);
rollers, belts or like engaging means arranged around the periphery of the chamber (12) to assist in the formation of a bale (11);
means for applying a longitudinal strip of netting around the cylindrical outer surface (13) of the bale (11) so as to form at least one layer of netting thereon; and, **characterized in that** the apparatus further comprises
means for applying stretch film wrapping (16) to the bale (11), such wrapping being of greater width than the axial extent of the bale and having a main portion which is guided to overlie the cylindrical surface of the bale, and a pair of opposed marginal portions which are guided so as to fold radially inwardly with respect to the axis (15) of the bale (11) and to engage each with at least an outer circumferential region of a corresponding circular end face (14) of the bale (11).

7. A baler apparatus according to any one of the preceding claims, in which the stretch film wrapping (16) is formed by a single longitudinal strip.

8. A baler apparatus according to any one of claims 1 to 6, in which the stretch film wrapping (16) is formed by two or more narrow strips arranged side by side, preferably overlapping, and having a combined width greater than the axial extent of the bale (11).

9. Apparatus according to any one of claims 6 to 8, in which the longitudinal strip of netting has a width which is greater than the axial extent of the bale (11), so that opposed marginal edge regions of the strip of netting also can fold radially inwardly, so as to engage over the corner edge region of the bale and engage the outer circumferential region of each corresponding circular end face (14) of the bale (11).

10. Apparatus according to any one of the preceding claims, in which a laterally oscillating film supply reel is provided, to deliver an oscillating layer of film around the bale.

11. Apparatus according to any one of the preceding claims, including more than one film reel dispenser, spaced apart axially relative to the bale, so as to apply more than one layer of film simultaneously to at least the cylindrical surface of the bale, and optionally onto at least part of the circular end faces of the bale.

12. Apparatus according to any one of the preceding claims, in which uncovered central areas 26 of the end faces 14 of the bale 11 which are uncovered are subsequently covered over, after discharge of the bale from the apparatus, by an adhesive cover layer 27.

13. Apparatus according to claim 1 or claim 6, including an edge film dispenser arranged to apply film obliquely to wrap the corner edges of the bale.

14. Apparatus according to claim 6, in which the engagement of the film with the edges of the cylindrical surface of the bale is facilitated by one or more of the following features:
a) displacement of the side wall (19), or a part of the side wall when applying the film;
b) rotating the side wall (19), or a part thereof that is in contact with the film; or,
c) introducing a lubricant or gas to reduce friction between the film and the side .

15. A method of forming a cylindrical bale, and applying netting and stretch film wrapping to the bale, using apparatus according to any one of the preceding claims.

## Patentansprüche

1. Ballenpressvorrichtung (10) zum Ausbilden und Einwickeln eines zylindrischen Ballens (11), welche umfasst:
eine Ballenformkammer (12);
Mittel zum Zuführen von Material, welches zum Ballen ausgebildet wird, zu der Kammer (12);
Walzen, Riemen oder ähnliche Eingriffsmittel, welche um den Umfang der Kammer (12) herum angeordnet sind, um in der Ausbildung eines Ballens zu helfen;
Mittel zum Aufbringen eines länglichen Streifens von Netzmaterial, um die zylindrische äußere Oberfläche (13) des Ballens (11) zu umhüllen, wobei die Mittel im Betrieb den Streifen in die Kammer (12) zuführen und bei Drehung des Ballens (11) um seine Achse (15) durch mindestens eines Teils der Eingriffsmittel eine Lage Netzmaterial um die zylindrische Oberfläche (13) des Ballens (11) herum aufbringen; und **dadurch gekennzeichnet, dass** die Vorrichtung des Weiteren umfasst:
Mittel zum Aufbringen von dehnbarem Folienverpackungsmaterial (16) auf mindestens die zylindrische Oberfläche (13) des Ballens (11), während der ausgeformte Ballen (11) in der Ballen bildenden Kammer (12) verbleibt, wobei eine solche Folie in die Kammer (12) zugeführt (18) wird und **dadurch** eine kombinierte Umhüllung aus Folie und Netz auf der zylindrischen Oberfläche (13) des Ballens (11) ausbildet.

2. Vorrichtung gemäß Anspruch 1, in welcher die Folie auf die zylindrische Oberfläche geführt wird, um so unter einer ersten Netzmateriallage zu liegen, die auf den Ballen aufgebracht wird.

3. Vorrichtung gemäß Anspruch 2, in welcher das Netzmaterial N und die Folie F von jeweiligen Ausgaberollen zugeführt werden, von denen sie abgezogen werden, und in welcher eine Eingangsführungsanordnung in Betrieb ist, um zuerst das führende Ende des Netzmaterials N auf die zylindrische Oberfläche (13) des Ballens (11) zu führen und dann das führende Ende der Folienverpackung F auf die Oberfläche zu führen, um so unter dem Netzmaterial zu liegen und um eine laminierte Schicht aus Folie und Netzmaterial auf der zylindrischen Oberfläche des Ballens auszubilden.

4. Vorrichtung gemäß Anspruch 3, in welcher das Netzmaterial über wenigstens eine Umdrehung des Ballens aufgebracht wird, vorzugsweise ungefähr 1,2 Umdrehungen, gefolgt vom Aufbringen wenigstens einer Lage Folie auf die Netzmateriallage.

5. Vorrichtung gemäß Anspruch 1, in welcher eine erste Lage Netzmaterial auf die zylindrische Oberfläche des Ballens durch bis zu eine Umdrehung des Ballens aufgebracht wird, gefolgt durch die Aufbringung von wenigstens einer Lage Folienverpackungsmaterial auf der Netzmateriallage.

6. Ballenpressvorrichtung (10) zum Ausbilden und Umwickeln eines zylindrischen Ballens (11), der eine zylindrische äußere Oberfläche (13) und ein Paar von gegenüber liegenden Stirnflächen (14) aufweist, und welche umfasst:
eine Ballenformkammer (12);
Mittel zum Zuführen von Material, welches zum Ballen ausgebildet wird, zu der Kammer (12);
Walzen, Riemen oder ähnliche Eingriffsmittel, welche um den Umfang der Kammer (12) herum angeordnet sind, um in der Ausbildung eines Ballens (11) zu helfen;
Mittel zum Aufbringen eines länglichen Streifens von Netzmaterial um die zylindrische äußere Oberfläche (13) des Ballens (11) herum, um so wenigstens eine Lage von Netzmaterial darauf auszubilden; und **dadurch gekennzeichnet, dass** die Vorrichtung des Weiteren umfasst:
Mittel zum Aufbringen von dehnbarem Folienverpackungsmaterial (16) auf den Ballen (11), wobei die Umwicklung von größerer Breite als die axiale Erstreckung des Ballens ist und einen Hauptabschnitt, der geführt wird, um über der zylindrischen Oberfläche des Ballens zu liegen, und ein Paar von gegenüber liegenden Randabschnitten aufweist, welche geführt werden, um so sich radial nach innen in Bezug auf die Achse (15) des Ballens (11) zu falten und um jeweils mit wenigstens einem äußeren Umfangsbereich einer jeweils zugeordneten runden Stirnfläche (14) des Ballens (11) in Eingriff zu kommen.

7. Ballenpressvorrichtung gemäß jedem beliebigen der vorangehenden Ansprüche, in welcher die dehnbare Folienverpackung (16) durch eine einzelne längliche Bahn ausgebildet wird.

8. Ballenpressvorrichtung gemäß jedem beliebigen der Ansprüche 1 bis 6, in welcher die dehnbare Folienverpackung (16) durch zwei oder mehr enge Bahnen, die Seite an Seite angeordnet sind, ausgebildet wird, vorzugsweise überlappend, und die eine kombinierte Breite aufweisen, die größer ist als die axiale Erstreckung des Ballens (11).

9. Vorrichtung gemäß jedem beliebigen der Ansprüche 6 bis 8, in welcher die längliche Bahn Netzmaterial eine Breite aufweist, die größer ist als die axiale Erstreckung des Ballens (11), so dass gegenüber liegende Randkantenbereiche der Bahn Netzmaterial sich ebenfalls radial nach innen falten können, um so über den Eckkantenbereich des Ballens einzugreifen und mit dem äußeren Umfangsbereich jeder entsprechend zugeordneten, runden Stirnfläche (14) des Ballens (11) in Eingriff zu stehen.

10. Vorrichtung gemäß jedem beliebigen der vorangehenden Ansprüche, in welcher eine seitlich oszillierende Folienzufuhrrolle bereit gestellt ist, um eine oszillierende Lage Folie um den Ballen zuzuführen.

11. Vorrichtung gemäß jedem beliebigen der vorangehenden Ansprüche, umfassend mehr als eine Folienrollenausgabevorrichtung, die relativ zum Ballen axial beabstandet sind, um so mehr als eine Lage Folie gleichzeitig auf wenigstens die zylindrische Oberfläche des Ballens und wahlweise auf wenigstens einen Teil der runden Stirnflächen des Ballens aufzubringen.

12. Vorrichtung gemäß jedem beliebigen der vorangehenden Ansprüche, in welcher unbedeckte mittige Flächen (26) der Stirnflächen (14) des Ballens (11), die unbedeckt sind, nachfolgend nach dem Ausstoß des Ballens aus der Vorrichtung durch eine klebende Abdeckschicht (27) bedeckt werden.

13. Vorrichtung gemäß Anspruch 1 oder Anspruch 6, umfassend eine Kantenfolionausgabevorrichtung, die angeordnet ist, um Folie schräg aufzubringen, um die Eckkanten des Ballens zu umwickeln.

14. Vorrichtung gemäß Anspruch 6, in welcher das Eingreifen der Folie mit den Kanten der zylindrischen Oberfläche des Ballens durch eines oder mehrere der folgenden Merkmale erreicht wird:
a) Versetzen der Seitenwand (19) oder eines Teils der Seitenwand, wenn der Film aufgebracht wird;
b) Drehen der Seitenwand (19) oder eines Teils von ihr, dass sie in Kontakt mit der Folie steht; oder
c) Einbringen eines Schmiermittels oder Gases, um die Reibung zwischen der Folie und der Seitenwand zu verringern.

15. Verfahren zum Ausbilden eines zylindrischen Ballens und zum Aufbringen von Netzmaterial- und Dehnfolienverpackung auf den Ballen, unter Verwendung der Vorrichtung gemäß einem beliebigen der vorangehenden Ansprüche.

## Revendications

1. Presse à balles (10) destinée à former et envelopper une balle cylindrique (II) et comprenant :
une chambre de formation de balle (12) ;
des moyens pour fournir un matériau à mettre en balle à la chambre (12) ;
des rouleaux, courroies ou moyens d'engagement similaires agencés autour de la périphérie de la chambre (12) pour contribuer à la formation d'une balle ;
des moyens pour appliquer une bande longitudinale de filet pour envelopper la surface cylindrique externe (13) de la balle (11), lesdits moyens étant opérationnels pour amener la bande dans la chambre (12) et, lors de la rotation de la balle (11) autour de son axe (15) par au moins une partie desdits moyens d'engagement, pour appliquer une couche de filet autour de la surface cylindrique (13) de la balle (11) ; et **caractérisée en ce que** l'appareil comprend en outre
des moyens pour appliquer un emballage de film étirable (16) sur au moins la surface cylindrique (13) de la balle (11), tandis que la balle formée (11) reste dans la chambre de formation de balle (12), ledit film étant amené (18) dans la chambre (12), et formant ainsi de manière effective une enveloppe combinée de film et de filet sur la surface cylindrique (13) de la balle (11).

2. Appareil selon la revendication 1, dans lequel le film est guidé sur la surface cylindrique de manière à être sous-jacent à une première couche de filet appliquée sur la balle.

3. Appareil selon la revendication 2, dans lequel le filet N et l'emballage de film F sont fournis par des bobines de distribution respectives desquelles ils sont retirés, et un agencement de guidage d'entrée est opérationnel tout d'abord pour amener l'extrémité avant du filet N sur la surface cylindrique (13) de la balle (11) et ensuite pour amener l'extrémité avant de l'emballage de film F sur la surface de manière à ce qu'il soit sous-jacent au filet et afin de former une couche stratifiée de film et de filet sur la surface cylindrique de la balle.

4. Appareil selon la revendication 3, dans lequel le filet est appliqué via au moins une révolution de la balle, de préférence environ 1,2 révolution, suivie de l'application d'au moins une couche de film sur la couche de filet.

5. Appareil selon la revendication 1, dans lequel une première couche de filet est appliquée sur la surface cylindrique de la balle, en effectuant jusqu' à une révolution, suivie par l'application d'au moins une couche d'emballage de film sur la couche de filet.

6. Presse à balles (10) destinée à former et envelopper une balle cylindrique (11) ayant une surface cylindrique externe (13) et une paire de faces d'extrémité circulaires opposées (14) et comprenant :
une chambre de formation de balle (12) ;
des moyens pour fournir un matériau à mettre en balle à la chambre (12) ;
des rouleaux, courroies ou moyens d'engagement similaires agencés autour de la périphérie de la chambre (12) pour contribuer à la formation d'une balle (11) ;
des moyens pour appliquer une bande longitudinale de filet autour de la surface cylindrique externe (13) de la balle (11) de manière à former au moins une couche de filet sur celle-ci ; et **caractérisée en ce que** l'appareil comprend en outre
des moyens pour appliquer un emballage de film étirable (16) sur la balle (11), cet emballage présentant une largeur supérieure à l'étendue axiale de la balle et ayant une partie principale qui est guidée de manière à reposer sur la surface cylindrique de la balle, et une paire de parties marginales opposées qui sont guidées de manière à se plier radialement vers l'intérieur par rapport à l'axe (15) de la balle (11) et à venir en prise chacune avec au moins une région circonférentielle externe d'une face d'extrémité circulaire correspondante (14) de la balle (11).

7. Presse à balles selon l'une quelconque des revendications précédentes, dans laquelle l'emballage de film étirable (16) est formé par une bande longitudinale unique.

8. Presse à balles selon l'une quelconque des revendications 1 à 6, dans laquelle l'emballage de film étirable (16) est formé par deux bandes étroites ou plus agencées côte à côte, de préférence se chevauchant, et ayant une largeur combinée supérieure à l'étendue axiale de la balle (11).

9. Appareil selon l'une quelconque des revendications 6 à 8, dans lequel la bande longitudinale de filet a une largeur qui est supérieure à l'étendue axiale de la balle (11), de sorte que des régions de bords marginaux opposées de la bande de filet puissent également se plier radialement vers l'intérieur, de manière à venir en prise sur la région de bord angulaire de la balle et à venir en prise avec la région circonférentielle externe de chaque face d'extrémité circulaire correspondante (14) de la balle (11).

10. Appareil selon l'une quelconque des revendications précédentes, dans lequel une bobine d'alimentation en film oscillant latéralement est prévue pour distribuer une couche de film oscillante autour de la balle.

11. Appareil selon l'une quelconque des revendications précédentes, comprenant plus d'un distributeur à bobine de film, espacés axialement par rapport à la balle, de manière à appliquer plus d'une couche de film simultanément sur au moins la surface cylindrique de la balle, et de manière optionnelle sur au moins une partie des faces d'extrémité circulaires de la balle.

12. Appareil selon l'une quelconque des revendications précédentes, dans lequel des zones centrales non couvertes 26 des faces d'extrémité 14 de la balle 11 qui sont non couvertes, sont ensuite recouvertes après la décharge de la balle depuis l'appareil, d'une couche de recouvrement adhésive 27.

13. Appareil selon la revendication 1 ou 6, comprenant un distributeur de film de bord agencé de manière à appliquer un film de façon oblique pour envelopper les bords angulaires de la balle.

14. Appareil selon la revendication 6, dans lequel l'engagement du film avec les bords de la surface cylindrique de la balle est facilité par l'une ou plusieurs des caractéristiques suivantes :
a) déplacement de la paroi latérale (19), ou d'une partie de la paroi latérale lors de l'application du film ;
b) rotation de la paroi latérale (19), ou d'une partie de celle-ci qui est en contact avec le film ; ou
c) introduction d'un lubrifiant ou d'un gaz pour réduire la friction entre le film et le côté.

15. Procédé de formation d'une balle cylindrique et d'application d'un filet et d'un emballage de film étirable sur la balle, à l'aide d'un appareil selon l'une quelconque des revendications précédentes.
